# EUROPEAN PATENT SPECIFICATION

(11) **EP 4 478 507 B1**
(45) Date of publication and mention of the grant of the patent: **02.09.2026**
(21) Application number: 23850308.0
(22) Date of filing: 19.07.2023
(51) Int. Cl.: H01M 50/24, H01M 10/659, H01M 50/211, H01M 50/222, H01M 50/178, H01M 50/595, H01M 50/249, H01M 50/383

(54) **BATTERY MODULE, AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 03.08.2022 KR 20220096773
(43) Date of publication of application: 18.12.2024
(73) Proprietor: LG Energy Solution, Ltd., Seoul 07335 (KR)
(72) Inventor: JANG, Sung-Hwan, Daejeon 34122 (KR); PARK, Myung-Ki, Daejeon 34122 (KR); SEONG, Jun-Yeob, Daejeon 34122 (KR); JUNG, Hye-Mi, Daejeon 34122 (KR)
(74) Representative: Plasseraud IP
(86) International application number: PCT/KR2023/010438
(87) International publication number: WO 2024/029801

(56) References cited:
- CN-A- 111 653 707
- CN-U- 211 605 229
- JP-U- 3 229 404
- KR-A- 20220 021 143
- KR-A- 20220 049 262
- KR-B1- 102 284 449
- KR-B1- 102 284 449
- US-A1- 2015 086 827
- US-A1- 2022 052 392

## Description

### TECHNICAL FIELD

The present disclosure relates to a battery module, and a battery pack including the same, and more particularly, to a battery module equipped with a heat propagation blocking means for suppressing or delaying chain ignition of other surrounding battery modules as much as possible when a thermal runaway event occurs in a battery cell included in a specific battery module, and a battery pack including the battery module.

The present application claims priority to Korean Patent Application No. 10-2022-0096773 filed on August 3, 2022 in the Republic of Korea.

### BACKGROUND ART

Semi-permanent batteries capable of converting electrical energy into chemical energy and repeated charging and discharging are referred to as secondary batteries to be distinguishable from primary batteries that may not be re-used after being used once.

Examples of secondary batteries include lithium secondary batteries, nickel cadmium (Ni-Cd) batteries, lead-acid batteries, nickel-metal hydride (Ni-MH) batteries, zinc-air batteries, and alkaline manganese batteries. Among them, lead-acid batteries and lithium secondary batteries may be the most actively commercialized secondary batteries.

**In** particular, lithium secondary batteries have recently been actively used as batteries for electric vehicles because of advantages of high energy storage density, light weight, small size, excellent safety, low discharge rate, and long lifespan. For reference, lithium secondary batteries are generally classified into cylindrical, prismatic, and pouch-type batteries according to manufacturing types, and may be used as batteries for energy storage systems (ESS) and other electric devices in addition to batteries for electric vehicles.

Currently, an operating voltage of one lithium secondary battery cell is about 2.5 V to 4.5 V. Accordingly, in order to use secondary batterie as energy sources for electric vehicles, a battery module is configured by connecting a plurality of lithium-ion battery cells in series and/or in parallel and a battery pack is configured by connecting the battery modules in series and/or in parallel.

Because a secondary battery involves a chemical reaction during charging and discharging, performance may be degraded when the secondary battery is used in an environment higher than an appropriate temperature, and when heat is not controlled to the appropriate temperature, there is a possibility of unexpected ignition or explosion. Because a battery module has a structure in which such secondary batteries are intensively stored inside a module case, when any one secondary battery undergoes thermal runaway and becomes a trigger cell, heat and flame may rapidly propagate to surrounding secondary batteries, thereby more easily leading to chain ignition of secondary batteries. Furthermore, because a plurality of battery modules are densely arranged in a typical battery pack, when a thermal event as described above occurs in one battery module and the battery module collapses, chain ignition of other surrounding battery modules may rapidly occur and explosion may occur when it gets worse.

For example, a module case of a battery module formed of an aluminum (Al) material has a low thermal melting point and is vulnerable to thermal runaway of secondary batteries accommodated in the module case. In particular, a front cover or a rear cover of the module case covering a portion where a bus bar and electrode leads are coupled to each other for electrical connection of secondary batteries is mostly formed of a plastic material for insulation, and thus, may easily collapse during thermal runaway of the secondary batteries. Accordingly, it is required to improve the structure of a battery module and a battery pack to ensure a sufficient user evaluation time by delaying the collapse of the battery module as much as possible even when a thermal runaway occurs and suppressing the rapid propagation of the thermal runaway to other surrounding battery modules.

CN 211 605 229, US 2022/052392, KR 102 284 449 and CN 111 653 707 relate to temperature management in battery pack.

### DISCLOSURE

### Technical Problem

The present disclosure is designed to solve the problems of the related art, and therefore the present disclosure is directed to providing a battery module that may prevent or delay the structural collapse of the battery module as much as possible during thermal runaway of a battery cell.

However, technical problems to be solved by the present disclosure are not limited to the above-described technical problems and one of ordinary skill in the art will understand other technical problems from the following description.

### Technical Solution

The invention is defined as per pending set of claims.

In one aspect of the present invention, there is provided a battery module including a cell stack including a plurality of battery cells stacked in one direction, a module case in which the cell stack is accommodated, and a heat propagation blocking sheet formed of a heat-resistant material and surrounding at least a portion of the cell stack inside the module case.

The heat propagation blocking sheet includes a silicone polymer that is ceramicized by heat.

The cell stack may include a plurality of pouch-type battery cells stacked in a horizontal direction, and the heat propagation blocking sheet may be provided to cover at least one of an upper portion, a lower portion, a left portion, a right portion, a front portion, and a rear portion of the cell stack.

The heat propagation blocking sheet may be provided between the pouch-type battery cells that are stacked.

The heat propagation blocking sheet includes a first cover surface covering the upper portion of the cell stack, and a second cover surface and a third cover surface respectively covering the front portion and the rear portion of the cell stack.

Each of the second cover surface and the third cover surface includes a lead draw-out portion through which electrode leads of the pouch-type battery cells pass.

The lead draw-out portion includes a sheet slit that is partially cut so that a certain number of electrode leads are inserted into the sheet slit.

A fireproof tape is attached to the sheet slit into which the electrode leads are inserted to seal the sheet slit.

The module case may include a case body surrounding an upper portion, a lower portion, a left portion and a right portion of the cell stack excluding a front portion and a rear portion where electrode leads of the battery cells are located, and an end cover coupled to the case body to cover a front side and a rear side of the cell stack.

The heat propagation blocking sheet may surround the front portion or the rear portion of the cell stack, wherein the electrode leads of the battery cells are configured to pass through the heat propagation blocking sheet.

In another aspect of the present disclosure, there is provided a battery pack including one or more battery modules described above.

In another aspect of the present disclosure, there is provided a vehicle including the battery pack.

### Advantageous Effects

According to one aspect of the present disclosure, there may be provided a battery module that may prevent or delay the structural collapse of the battery module as much as possible during thermal runaway of a battery cell.

In particular, according to one aspect of the present disclosure, when thermal runaway occurs in a battery cell, a heat propagation blocking sheet may absorb heat while being ceramicized. Accordingly, a temperature rise of battery cells may be suppressed or delayed.

Also, according to one aspect of the present disclosure, because a heat propagation blocking sheet blocks gas, flame, and high-temperature particles ejected from battery cells, a temperature rise and damage to a module case may be prevented. Accordingly, a structural collapse rate of a battery module during a thermal event may be significantly reduced.

Also, according to one aspect of the present disclosure, the sudden collapse of an end cover which is particularly thermally vulnerable may be prevented. Here, the end cover that is a part of a module case covering a portion where an electrode lead and a bus bar are connected to each other may be formed of a non-metallic material.

In a battery module according to the present disclosure, a front portion or a rear portion of a cell stack may be surrounded by a heat propagation blocking sheet and an electrode lead may be configured to pass through the heat propagation blocking sheet. According to this embodiment, an end cover portion which is the most thermally vulnerable portion of a module case may be protected from high-temperature gas, flame, and particles ejected from the front portion or the rear portion of the cell stack.

The effects of the present disclosure are not limited to the effects mentioned above, and other effects not mentioned will be clearly understood by one of ordinary skill in the art from the specification and the attached drawings.

### DESCRIPTION OF DRAWINGS

FIG. 1 is a schematic perspective view illustrating a battery module according to an embodiment of the present disclosure.
FIG. 2 is an exploded perspective view illustrating main components of a battery module according to an embodiment of the present disclosure.
FIG. 3 is a perspective view illustrating a cell stack to which a heat propagation blocking sheet is applied according to an embodiment of the present disclosure.
FIG. 4 is a perspective view illustrating a cell stack to which a heat propagation blocking sheet is applied according to another embodiment of the present disclosure.
FIG. 5 is a perspective view illustrating a cell stack to which a heat propagation blocking sheet is applied according to still another embodiment of the present disclosure.
FIG. 6 is a schematic perspective view illustrating the heat propagation blocking sheet of FIG. 5.
FIG. 7 is a view corresponding to an enlarged portion of FIG. 5, illustrating an example of applying a fire-resistant tape to an electrode lead draw-out portion of the heat propagation blocking sheet.
FIG. 8 is a view for describing an example where a heat propagation blocking sheet blocks gas or flame according to still another embodiment of the present disclosure.
FIG. 9 is a schematic cross-sectional view illustrating a portion of a battery module according to still another embodiment of the present disclosure.
FIG. 10 is a view schematically illustrating a configuration of a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

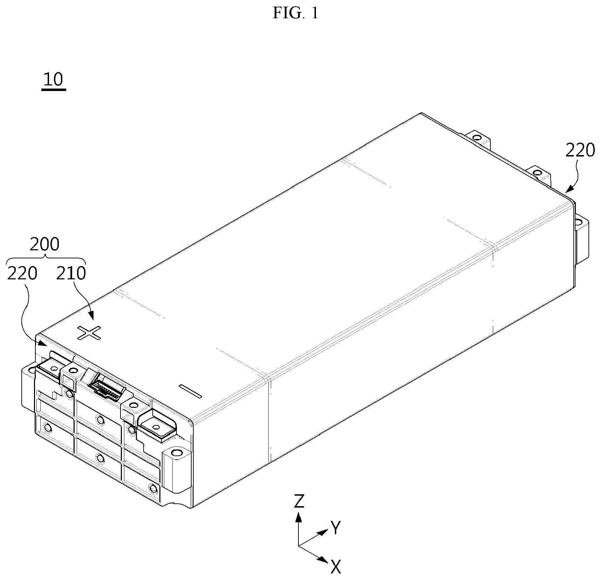

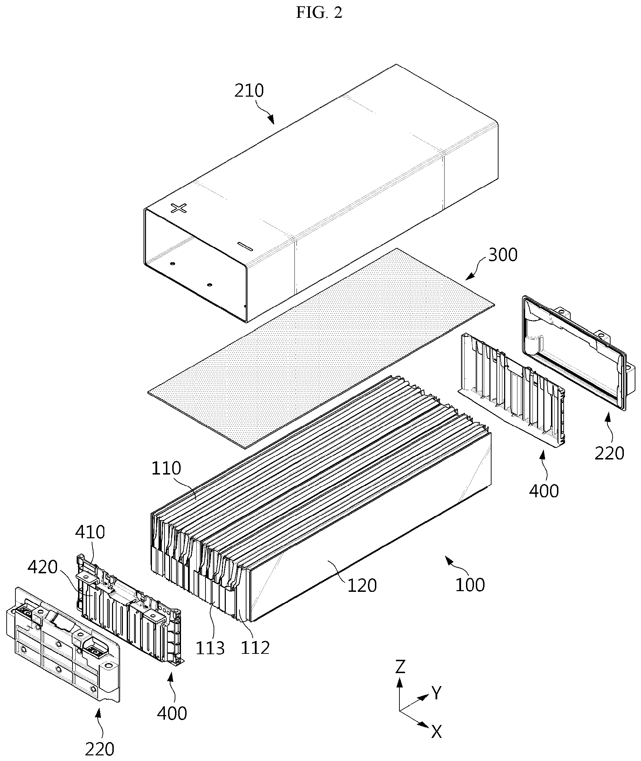

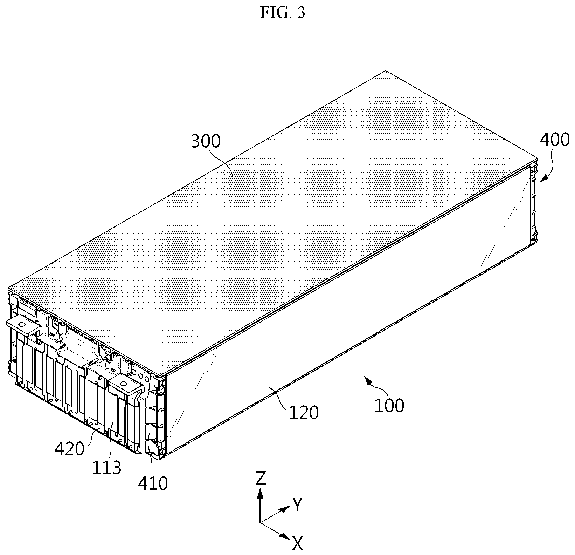

FIG. 1 is a schematic perspective view illustrating a battery module according to an embodiment of the present disclosure. FIG. 2 is an exploded perspective view illustrating main components of a battery module according to an embodiment of the present disclosure. FIG. 3 is a perspective view illustrating a cell stack to which a heat propagation blocking sheet is applied according to an embodiment of the present disclosure.

Referring to FIGS. 1 to 3, a battery module 10 according to an embodiment of the present disclosure includes a cell stack 100, a module case 200, and a heat propagation blocking sheet 300.

The cell stack 100 is a collection of battery cells 110 formed by stacking a plurality of battery cells 110. For example, the cell stack 100 may include a plurality of pouch-type battery cells 110 stacked along a horizontal direction (X direction) with a wide surface erected, as shown in FIG. 2. A compressible pad 120 may be located an outer surface of an outermost battery cell 110 in the cell stack 100. The compressible pad 120 may be formed of, for example, a foam material, and absorbs swelling pressure of the cell stack 100 and insulates the cell stack 100 from the module case 200.

The pouch-type battery cell 110 includes an electrode assembly, a pouch casing in which the electrode assembly is accommodated, and one pair of electrode leads 113 connected to the electrode assembly, drawn out of the pouch casing, and functioning as electrode terminals. The one pair of electrode leads 113 are drawn out in opposite directions in a longitudinal direction (±Y direction) of the battery cell 110. Although not shown, in the pouch-type battery cell 110, the electrode lead 113 may be located only at one end in the Y axis direction, for example, an end in the +Y axis direction.

The pouch-type battery cell 110 may include a receiving portion and an edge portion. The receiving portion may be a portion in which the electrode assembly and an electrolyte are accommodated. The edge portion may surround the receiving portion. In particular, the edge portion may be a sealing portion 112 sealed by thermally fusing the pouch casing. For example, there may be four edge portions, and the four edge portions may be located at an upper edge, a lower edge, a front edge, and a rear edge of the receiving portion. In this case, all of the four edge portions or three edge portions may be the sealing portions 112. Both the front edge portion and the rear edge portion where the electrode leads 113 are drawn out include the sealing portions 112.

As shown in FIG. 2, the cell stack 100 may be provided in a substantially hexahedral shape and may be divided into an upper portion, a lower portion, a left portion, a right portion, a front portion, and a rear portion. The upper portion and the lower portion may respectively correspond to the upper edge portions and the lower edge portions of the pouch-type battery cells 110, the left portion and the right portion may respectively correspond to outer surfaces (or the compressible pads 120) of outermost battery cells 110 in a stacking direction of the cell stack 100, and the front portion and the rear portion may respectively correspond to the front edge portions and the rear edge portions of the pouch-type battery cells 110.

Bus bar assemblies 400 may be mounted on a front side and a rear side of the cell stack 100. The bus bar assembly 400 is a means for connecting the pouch-type battery cells 110 in series and/or in parallel and includes a bus bar frame 410 and a plurality of bus bars 420.

The bus bar frame 410 may is provided in a plate shape with a size large enough to cover the front side (-Y direction) or the rear side (+Y direction) of the cell stack 100. Also, the bus bar frame 410 may include a plurality of frame slots through which the electrode leads 113 of the pouch-type battery cells 110 may pass, and an outer surface to which the plurality of bus bars may be attached in the same direction as the stacking direction of the battery cells 110. The bus bar frame 410 may be formed of, for example, plastic, for electrical insulation from the electrode leads 113.

The plurality of bus bars 420 may be provided in a bar shape and formed of an electrically conductive material, for example, a metal material such as copper, aluminum, or nickel and may be located on the bus bar frame 410 so as not to interfere with the frame slots. The electrode leads 113 of the pouch-type battery cells 110 may be drawn out of the bus bar frame 410 through the frame slots, and the drawn portions may be bent and attached to a surface of the bus bar 420 by using welding or the like. For example, a positive electrode lead of at least one pouch-type battery cell 110 and a negative electrode lead of at least another pouch-type battery cell 110 may be attached to the same bus bar to electrically connect the pouch-type battery cells 110.

The module case 200 is a component for protecting the cell stack 100 from external impact or the like and may be preferably formed of a metal material having excellent mechanical rigidity. The module case 200 according to the present embodiment may include a case body 210 and an end cover 220, as shown in FIGS. 1 and 2.

The case body 210 may surround the upper portion, the lower portion, the left portion, and the right portion of the cell stack 100 excluding the front portion and the rear portion where the electrode leads 113 of the battery cells 110 are located. For example, as shown in FIG. 2, the case body 210 has a hollow structure with an empty inside, and includes an open portion with both ends open in the longitudinal direction. That is, the case body 210 may have a quadrangular tube shape. The cell stack 100 may be inserted into the case body 210 in the longitudinal direction so that the upper portion, the lower portion, the left portion, and the right portion are surrounded by the case body 210.

For reference, the case body 210 may include one or more resin injection holes in a bottom surface. Although not shown, after the cell stack 100 is inserted into the case body 210, a thermal resin (not shown) may be injected into the case body 210 through the resin injection holes, and thus, the thermal resin may be filled between the bottom surface of the case body 210 and the lower portion of the cell stack 100. The thermal resin may enhance fixability of the cell stack 100 to the case body 210 and may improve heat dissipation. The case body 210 according to the present embodiment may be integrally formed in a quadrangular tube shape. However, unlike in the present embodiment, the case body 210 may be formed by coupling two or more plates.

The end cover 220 may be configured to cover the front side or the rear side of the cell stack 100 and be coupled to the case body 210. For example, the end cover 220 may be provided in a size corresponding to the open portion of the case body 210, and may be fixedly coupled to the case body 210 by using a method such as snap-fit, bolting, or welding. As such, when the end cover 220 is coupled to the case body 210, the electrode leads 113 and the bus bars may not be exposed to the outside. Also, the end cover 220 may be entirely formed of a plastic material for electrical insulation, or at least one surface of the end cover 220 facing the bus bars may be formed of an electrically insulating material. Also, the end cover 220 may include a partially cut or perforated part. This part may be used to provide a positive electrode terminal and a negative electrode terminal across the inside and outside of the battery module 10 or install a cable connector (not shown).

The heat propagation blocking sheet 300 is a component for preventing the module case 200 from rapidly collapsing due to high-temperature gas or flame when a thermal event occurs in the battery module 10. The heat propagation blocking sheet 300 may be formed of a heat-resistant material, and may surround at least a portion of the cell stack 100 inside the module case 200.

For example, the heat propagation blocking sheet 300 may be provided to cover at least one of the upper portion, the lower portion, the left portion, the right portion, the front portion, and the rear portion of the cell stack 100.

In particular, the heat propagation blocking sheet 300 according to the present disclosure may include a silicone polymer that is ceramicized by heat. The heat propagation blocking sheet 300 may be soft at room temperature, but when a temperature rises, may be crosslinked through a thermal reaction and may be phase changed into hard solid ceramic In the battery module 10 according to the present disclosure, because the cell stack 100 is surrounded by the heat propagation blocking sheet 300, even when a thermal event occurs inside the battery module 10 and high-temperature gas or flame is ejected, the module case 200 may be protected by the heat propagation blocking sheet 300 and thus may not easily structurally collapse. That is, when a thermal event occurs, the heat propagation blocking sheet 300 becomes hard and is ceramicized by a thermal reaction. In this case, because the heat propagation blocking sheet 300 absorbs heat while being ceramicized, high-temperature gas may be cooled and ignition of the battery cell 110 may be suppressed. Also, because the heat propagation blocking sheet 300 is ceramicized to further increase mechanical rigidity, even when high-temperature particles (e.g., electrode plate pieces released from the electrode assembly) as well as gas and flame are ejected from the battery cell 110, the heat propagation blocking sheet 300 may not be easily perforated.

In more detail, as shown in FIGS. 2 and 3, the heat propagation blocking sheet 300 according to an embodiment of the present disclosure may be configured to cover the upper portion of the cell stack100. In this case, preferably, the upper edge portion of the pouch-type battery cell 110 may include the sealing portion 112 where the pouch casing is thermally fused, and the lower edge portion may be configured to fold the pouch casing and surround an edge portion of the electrode assembly received therein. In the pouch-type battery cell 110, because the sealing portion 112 of the pouch casing is vulnerable to pressure, the sealing portion 112 may be torn during thermal runaway and gas, flame, and particles are likely to be ejected. Accordingly, in the present embodiment, the heat propagation blocking sheet 300 may be located on the upper portion of the cell stack 100, and the upper portion of the cell stack 100 may be the upper edge portion of the pouch-type battery cell 110 including the sealing portion 112.

For example, when ignition occurs inside the battery module 10 that is sealed, in particular, high-temperature and high pressure gas may mainly travel upward, rather than downward or lateralward. As in the present embodiment, when the heat propagation blocking sheet 300 is located on the upper portion of the cell stack 100, a top surface of the module case 200 may be stably protected from the high-temperature and high pressure gas.

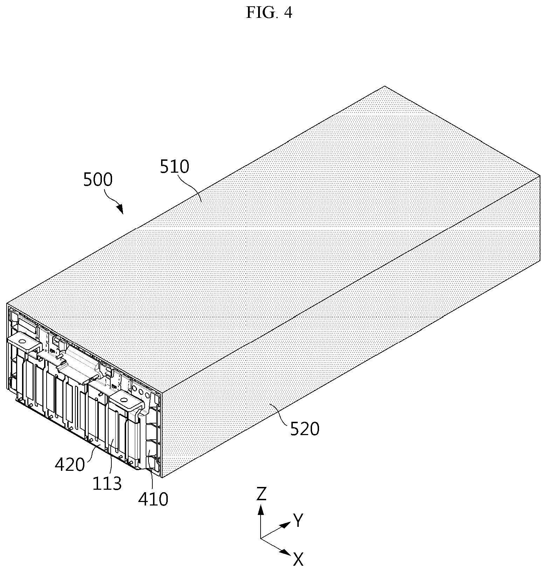

The heat propagation blocking sheet 300 may be configured to cover other portions as well as the upper portion of the cell stack 100. For example, as shown in FIG. 4, a heat propagation blocking sheet 500 according to another embodiment of the present disclosure may include an upper cover surface 510 covering the upper portion of the cell stack 100 and a side cover surface 520 covering both side surfaces of the cell stack 100. According to this embodiment, gas or flame may be more reliably and firmly blocked.

Also, although not shown, the heat propagation blocking sheet may be located between the stacked pouch-type battery cells 110 to block heat movement between the battery cells 110.

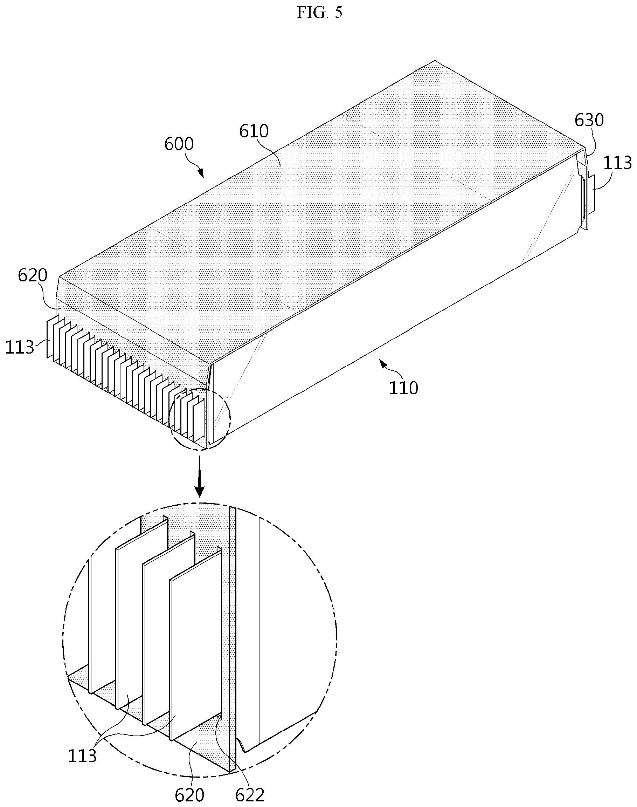

FIG. 5 is a perspective view illustrating the cell stack 100 to which a heat propagation blocking sheet 600 is applied according to still another embodiment of the present disclosure.

As shown in FIG. 5, in the battery module 10 according to still another embodiment of the present disclosure, the heat propagation blocking sheet 600 may surround the front portion or the rear portion of the cell stack 100, and the electrode leads 113 of the battery cells 110 may pass through the heat propagation blocking sheets 300.

The battery module 10 according to still another embodiment of the present disclosure includes main components of the battery module 10 of the above embodiment, a repeated description of the same components as those in the above embodiment will be omitted, and the heat propagation blocking sheet 600 according to still another embodiment of the present disclosure and a difference in configuration will be described in detail.

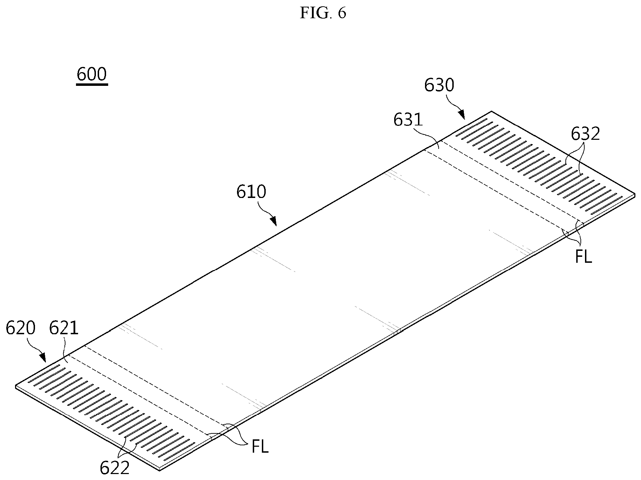

Referring to FIGS. 5 and 6 together, the heat propagation blocking sheet 600 according to still another embodiment of the present disclosure includes a first cover surface 610 covering the upper portion of the cell stack 100 and a second cover surface 620 and a third cover surface 630 respectively covering the front portion and the rear portion of the cell stack 100.

The second cover surface 620 and the third cover surface 630 include lead draw-out portions 621, 631 through which a certain number of electrode leads 113 may pass. For example, the lead draw-out portions 621, 631 may include sheet slits 622, 632 formed by partially cutting a portion of the second cover surface 620 in the longitudinal direction, as shown in FIG. 6. As shown in a partially enlarged view of FIG. 5, the electrode leads 113 may be inserted into the sheet slits 622, 632 and may be drawn out of the second cover surface 620 (or the third cover surface 630). The electrode leads 113 drawn out of the second cover surface 620 may pass through frame slots of the bus bar frame 410 and may be welded to the bus bar 420, as in the above embodiment (see FIG. 3). Although one electrode lead 113 is inserted into one sheet slit 622, 632 in an embodiment of FIG. 5, unlike in the present embodiment, two, three, or more electrode leads 113 may be folded and inserted into one sheet slit 622, 632 and intervals between the sheet slits 622, 632 may also vary.

Also, the second cover surface 620 and the third cover surface 630 may include folding lines 'FL' as shown in FIG. 6. The second cover surface 620 and the third cover surface 630 may be easily folded along the folding lines with respect to the first cover surface 610. There may be a plurality of folding lines. For example, there may be a first folding line at a boundary between the first cover surface 610 and the second cover surface 620, and there may be a second folding line at a certain distance from the first folding line. According to this configuration, the second cover surface 620 may be folded along the first folding line with respect to the first cover surface 610, and a portion under the second folding line may be folded again with respect to an upper portion along the second folding line. In this case, as the second cover surface 620 is closer to the front portion of the cell stack 100, the electrode leads 113 may be easily pulled out of the second cover surface 620.

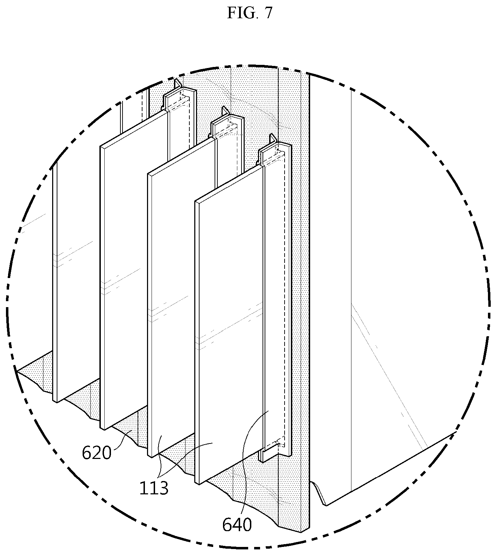

Also, the sheet slits 622, 632 of the second cover surface 620 and the third cover surface 630 may be sealed after the electrode leads 113 are inserted into the sheet slits 622, 632 of the second cover surface 620 and the third cover surface 630. For example, as in an embodiment of FIG. 7, a fireproof tape 640 may be attached to the outside of the sheet slits 622, 632 into which the electrode leads 113 are inserted. The sheet slits 622, 632 may be slightly larger than the electrode leads 113 in order to easily insert the electrode leads 113 into the sheet slits 622, 632. After the electrode leads 113 are inserted into the sheet slits 622, 632, there are empty gaps. The fireproof tape 640 removes the empty gaps in order to completely seal the sheet slits 622, 632 into which the electrode leads 113 are inserted. As such, when the sheet slits 622, 632 are sealed with the fireproof tape 640, gas or flame may be prevented from escaping through the empty gaps of the sheet slits 622, 632. Furthermore, because the fireproof tape 640 holds the sheet slits 622, 632, even when pressure of gas is applied, the sheet slits 622, 632 may not be easily opened or torn.

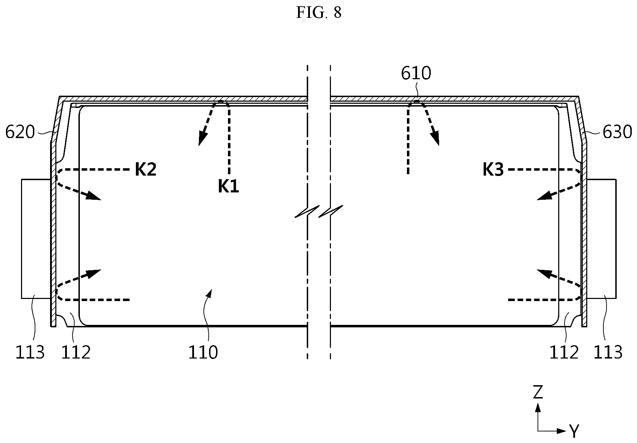

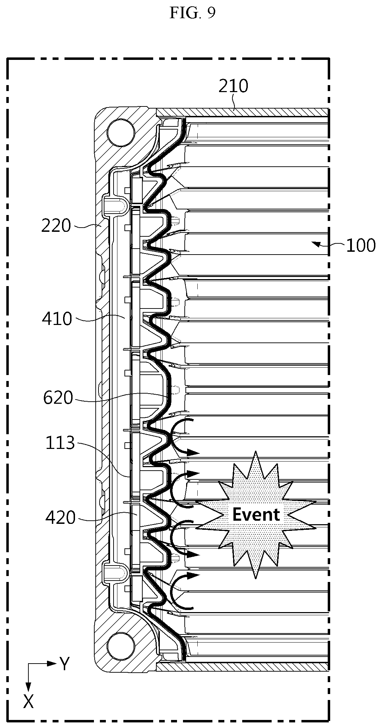

FIG. 8 is a view for describing an example where the heat propagation blocking sheet 300 blocks gas or flame according to still another embodiment of the present disclosure. FIG. 9 is a schematic cross-sectional view illustrating a portion of the battery module 10 according to still another embodiment of the present disclosure.

According to the configuration of the heat propagation blocking sheet 600 described above, gas or flame may be blocked from being ejected upward as indicated by K1 of FIG. 8 from the cell stack 100 and may be blocked from being ejected frontward as indicated by K2 or backward as indicated by K3 from the cell stack 100 toward the electrode lead 113 and the bus bar.

As described above, the end cover 220 for preventing the electrode lead 113 and the bus bar from being exposed to the outside is provided on a front side or a rear side of the cell stack 100. Because the end cover 220 is formed of a non-metallic material that is an electrically insulating material and includes a partially cut or perforated part to provide a terminal of a module or a connector installation hole, the end cover 220 is particularly vulnerable to high-temperature gas or flame. However, in the battery module 10 of the present disclosure, as shown in FIG. 9, the front portion of the cell stack 100 is surrounded by the second cover surface 620 of the heat propagation blocking sheet 600. Accordingly, even when a thermal event occurs in the battery cell 110, the bus bar frame 410 including the end cover 220 may be prevented from being melted and lost due to high-temperature gas or flame.

As described above, according to the configuration of the battery module 10 the operation of the configuration according to the present disclosure, even when a thermal event occurs inside the battery module 10 and gas or flame is ejected from the battery cells 110, the sudden structural collapse of the battery module 10 may be prevented. Also, because the sudden structural collapse of the battery module 10 in which the thermal event occurs is prevented, a thermal runaway chain reaction of other surrounding battery modules 10 may be prevented.

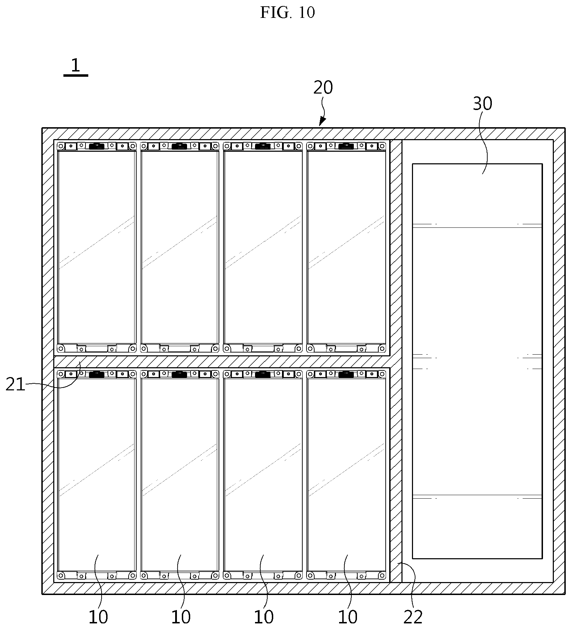

A battery pack according to the present disclosure may include one or more battery modules 10 described above, as shown in FIG. 10. A battery pack 1 according to the present disclosure may further include a master BMS 30 for integrally controlling charging and discharging of one or more battery modules 10, a current sensor, a fuse, and a pack case 20 in which the above components are accommodated. The pack case may include a pack tray having an inner space divided by crossbeams 21, 22 and a pack cover covering the top of the pack tray.

The battery pack according to the present disclosure may be applied to an energy storage device or may be applied to a vehicle such as an electric scooter, an electric vehicle, or a hybrid vehicle.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

It will be understood by one of ordinary skill in the art that when terms indicating directions such as upper, lower, left, right, front, and rear are used, these terms are only for convenience of explanation and may vary according to a position of a target object, a position of an observer, etc.

## Claims

1. A battery module (10) comprising:
a cell stack (100) comprising a plurality of battery cells (110) stacked in one direction;
a module case (200) in which the cell stack (100) is accommodated; and
a heat propagation blocking sheet (600) formed of a heat-resistant material and surrounding at least a portion of the cell stack inside the module case,
wherein the heat propagation blocking sheet (600) comprises a silicone polymer configured to be soft at room temperature and crosslinked through a thermal reaction to change phase into hard solid ceramic when temperature rises due to a thermal event that occurs inside the battery module (10),
wherein the cell stack comprises a plurality of pouch cell type battery cells stacked in a horizontal direction,
wherein the heat propagation blocking sheet (600) comprises:
a first cover surface (610) covering the upper portion of the cell stack (100); and
a second cover surface (620) and a third cover surface (630) respectively covering the front portion and the rear portion of the cell stack (100)
wherein each of the second cover surface (620) and the third cover surface (630) comprises a lead draw-out portion (621, 631) through which electrode leads (113) of the pouch-type battery cells (110) pass,
wherein the lead draw-out portion (621, 631) comprises a sheet slit (622, 632) that is partially cut so that a certain number of electrode leads (113) are inserted into the sheet slit (622, 632), and wherein a fireproof tape (640) is attached to the sheet slit (622) into which the electrode leads (113) are inserted to seal the sheet slit (622).

2. The battery module (10) according to claim 1, wherein the heat propagation blocking sheet (600) is provided between the pouch-type battery cells (110) that are stacked.

3. The battery module (10) according to claim 1, wherein the module case (200) comprises:
a case body (210) surrounding an upper portion, a lower portion, a left portion and a right portion of the cell stack (100) excluding a front portion and a rear portion where electrode leads (113) of the battery cells (110) are located; and
an end cover (220) coupled to the case body (210) to cover a front side and a rear side of the cell stack (100).

4. The battery module (10) according to claim 3,
wherein the electrode leads (113) of the battery cells (110) are configured to pass through the heat propagation blocking sheet (600).

5. A battery pack (1) comprising the battery module (10) according to one of claims 1 to 4.

6. A vehicle comprising the battery pack according to claim 5.

## Patentansprüche

1. Batteriemodul (10), umfassend:
einen Zellenstapel (100), der eine Vielzahl von Batteriezellen (110) umfasst, die in einer Richtung gestapelt sind;
ein Modulgehäuse (200), in dem der Zellenstapel (100) untergebracht ist; und
eine Wärmeausbreitungs-Sperrfolie (600), die aus einem hitzebeständigen Material gebildet ist und mindestens einen Teil des Zellenstapels im Inneren des Modulgehäuses umgibt,
wobei die Wärmeausbreitungs-Sperrfolie (600) ein Silikonpolymer umfasst, das so konfiguriert ist, dass es bei Raumtemperatur weich ist und durch eine thermische Reaktion vernetzt wird, um in eine harte, feste Keramikphase überzugehen, wenn die Temperatur aufgrund eines thermischen Ereignisses ansteigt, das im Inneren des Batteriemoduls (10) auftritt,
wobei der Zellenstapel eine Vielzahl von Batteriezellen vom Pouch-Zelltyp umfasst, die in einer horizontalen Richtung gestapelt sind,
wobei die Wärmeausbreitungs-Sperrfolie (600) umfasst:
eine erste Abdeckfläche (610), die den oberen Teil des Zellenstapels (100) abdeckt; und
eine zweite Abdeckfläche (620) und eine dritte Abdeckfläche (630), die jeweils den vorderen Teil und den hinteren Teil des Zellenstapels (100) abdecken,
wobei jede der zweiten Abdeckfläche (620) und der dritten Abdeckfläche (630) einen Leitungsherausführungsabschnitt (621, 631) umfasst, durch den Elektrodenleiter (113) der Batteriezellen vom Pouch-Typ (110) verlaufen,
wobei der Leitungsherausführungsabschnitt (621, 631) einen Folienschlitz (622, 632) umfasst, der teilweise geschnitten ist, so dass eine bestimmte Anzahl von Elektrodenleitern (113) in den Folienschlitz (622, 632) eingeführt wird, und wobei ein feuerfestes Band (640) an dem Folienschlitz (622) angebracht ist, in den die Elektrodenleiter (113) eingeführt sind, um den Folienschlitz (622) abzudichten.

2. Batteriemodul (10) nach Anspruch 1, wobei die Wärmeausbreitungs-Sperrfolie (600) zwischen den gestapelten Batteriezellen vom Pouch-Typ (110) vorgesehen ist.

3. Batteriemodul (10) nach Anspruch 1, wobei das Modulgehäuse (200) umfasst:
einen Gehäusekörper (210), der einen oberen Teil, einen unteren Teil, einen linken Teil und einen rechten Teil des Zellenstapels (100) umgibt, mit Ausnahme eines vorderen Teils und eines hinteren Teils, wo sich Elektrodenleiter (113) der Batteriezellen (110) befinden; und
eine Endabdeckung (220), die mit dem Gehäusekörper (210) gekoppelt ist, um eine vordere Seite und eine hintere Seite des Zellenstapels (100) abzudecken.

4. Batteriemodul (10) nach Anspruch 3, wobei die Elektrodenleiter (113) der Batteriezellen (110) so konfiguriert sind, dass sie durch die Wärmeausbreitungs-Sperrfolie (600) verlaufen.

5. Batteriepack (1), umfassend das Batteriemodul (10) nach einem der Ansprüche 1 bis 4.

6. Fahrzeug, umfassend den Batteriepack nach Anspruch 5.

## Revendications

1. Module de batterie (10) comprenant :
un empilement de cellules (100) comprenant une pluralité de cellules de batterie (110) empilées dans une direction ;
un boîtier de module (200) dans lequel l'empilement de cellules (100) est logé ; et
une feuille de blocage de propagation de chaleur (600) formée d'un matériau résistant à la chaleur et entourant au moins une partie de l'empilement de cellules à l'intérieur du boîtier de module,
dans lequel la feuille de blocage de propagation de chaleur (600) comprend un polymère de silicone configuré pour être souple à température ambiante et réticulé par une réaction thermique pour passer en phase de céramique solide dure lorsque la température augmente en raison d'un événement thermique qui se produit à l'intérieur du module de batterie (10),
dans lequel l'empilement de cellules comprend une pluralité de cellules de batterie de type poche empilées dans une direction horizontale,
dans lequel la feuille de blocage de propagation de chaleur (600) comprend :
une première surface de recouvrement (610) recouvrant la partie supérieure de l'empilement de cellules (100) ; et
une deuxième surface de recouvrement (620) et une troisième surface de recouvrement (630) recouvrant respectivement la partie avant et la partie arrière de l'empilement de cellules (100)
dans lequel chacune de la deuxième surface de recouvrement (620) et de la troisième surface de recouvrement (630) comprend une partie de sortie de conducteur (621, 631) à travers laquelle passent les conducteurs d'électrode (113) des cellules de batterie de type poche (110),
dans lequel la partie de sortie de conducteur (621, 631) comprend une fente de feuille (622, 632) qui est partiellement coupée de sorte qu'un certain nombre de conducteurs d'électrode (113) sont insérés dans la fente de feuille (622, 632), et dans lequel un ruban ignifuge (640) est fixé à la fente de feuille (622) dans laquelle les conducteurs d'électrode (113) sont insérés pour sceller la fente de feuille (622).

2. Module de batterie (10) selon la revendication 1, dans lequel la feuille de blocage de propagation de chaleur (600) est disposée entre les cellules de batterie de type poche (110) qui sont empilées.

3. Module de batterie (10) selon la revendication 1, dans lequel le boîtier de module (200) comprend :
un corps de boîtier (210) entourant une partie supérieure, une partie inférieure, une partie gauche et une partie droite de l'empilement de cellules (100) à l'exclusion d'une partie avant et d'une partie arrière où les conducteurs d'électrode (113) des cellules de batterie (110) sont situés ; et
un couvercle d'extrémité (220) couplé au corps de boîtier (210) pour couvrir un côté avant et un côté arrière de l'empilement de cellules (100).

4. Module de batterie (10) selon la revendication 3, dans lequel les conducteurs d'électrode (113) des cellules de batterie (110) sont configurés pour passer à travers la feuille de blocage de propagation de chaleur (600).

5. Bloc-batterie (1) comprenant le module de batterie (10) selon l'une des revendications 1 à 4.

6. Véhicule comprenant le bloc-batterie selon la revendication 5.
